# EUROPEAN PATENT APPLICATION

(11) **EP 2 448 200 A1**
(43) Date of publication of application: **02.05.2012**
(21) Application number: 10791354.3
(22) Date of filing: 20.05.2010
(51) Int. Cl.: H04L 12/58, H04N 7/14

(54) **METHOD, DEVICE AND SYSTEM FOR ENABLING INTERACTION BETWEEN VIDEO AND VIRTUAL NETWORK SCENE**

(30) Priority: 23.06.2009 CN 200910150595
(71) Applicant: Tencent Technology (Shenzhen) Company Limited, Shenzhen Guangdon 518044 (CN)
(72) Inventor: LI, Zhuanke, Guangdong 518044 (CN)
(74) Representative: Isarpatent
(86) International application number: PCT/CN2010/072993
(87) International publication number: WO 2010/148848

(57) **Abstract**

Examples of the present disclosure provide a method, an apparatus and a system for implementing interaction between a video and a virtual network scene. The method includes: obtaining video data of a user; displaying, on a client, a video corresponding to the video data in the virtual network scene by embedding the video in the virtual network scene; or displaying the video corresponding to the video data in the virtual network scene according to the video data. Through associating the video and the network service in the virtual network scene, the relativity between the video and the network service in the virtual network scene is increased, interaction between the video and the network service is realized and user's experience is improved.

## Description

### FIELD

The present disclosure relates to computer techniques, and more particularly, to a method, an apparatus and a system for implementing interaction between a video and a virtual network scene.

### BACKGROUND

With rapid development of the Internet, users can enjoy services such as online office, online entertainment through the Internet. When implementing the services including the online office and the online entertainment, existing techniques provide a virtual network scene in order to improve user's experience and extend service scope provided by the Internet. For example, when multiple users play a network game, the users will feel like stay in the game through the virtual network game scene, which greatly improves the user's experience and increases satisfaction degree of the users to the network service. The virtual network scene may be applied to, but is not limited to network game, network meeting, etc.

The inventor of the present disclosure finds that the above existing technique has at least the following defects and shortcomings: the network service based on the virtual network scene can provide to the users only interactions in the virtual scene. The provision mode is simplex. It cannot provide the users with experience combined with reality and also cannot provide the users with experience combined with the network service. The user is able to see only the virtual people in the virtual scene, but cannot see real identity and real look of other persons participating in the network service. And the user is unable to let other people see himself/herself through the network during the network service, which makes the interaction between user's experience and the network service in the virtual network scene impossible, and brings poor experience to the users.

### SUMMARY

Examples of the present disclosure provide a method, an apparatus and a system for implementing interaction between a video and a virtual network service, so as to increase relativity between the video and a network service in the virtual network scene, realize interaction between the video and the network service and improve user's experience.

According to one aspect of the present disclosure, a method for implementing interaction between a video and a virtual network scene is provided. The method includes:
obtaining video data of a user;
displaying, on a client, a video corresponding to the video data by embedding the video in the virtual network scene; or
displaying the video corresponding to the video data in the virtual network scene according to the video data.

According to another aspect of the present disclosure, an apparatus for implementing interaction between a video and a virtual network scene is provided. The apparatus includes:
means for obtaining video data of a user;
means for displaying a video corresponding to the video data of the user in a virtual network scene on a client of the user by embedding the video in the virtual network scene; or means for displaying a video corresponding to the video data in the virtual network scene on a client.

According to another aspect of the present disclosure, a system for implementing interaction between a video and a virtual network scene is provided. The system includes: a server to implement the interaction between the video and the virtual network scene, at least two clients to implement interaction between the video and the virtual network scene, wherein
each of the at least two clients is to collect video data of a user, display a video of the user on the client according to the video data of the user, recognize action information of the user according to the video data of the user, apply the action information of the user on the virtual network scene to implement the interaction between the video and the virtual network scene;
the server is to forward the video data between the clients, and control the virtual network scene after forwarding virtual network scene control information between the clients.

According to still another aspect of the present disclosure, a computer-readable storage medium is provided. The computer-readable storage medium stores computer programs used for enabling one or more processors to
obtain video data of a user,
display, on a client, a video corresponding to the video data in the virtual network scene by embedding the video in the virtual network scene; or,
display the video corresponding to the video data in the virtual network scene of the client.

Advantageous of the technical solution provided by the present disclosure are as follows:

Through associating the video with the network service in the virtual network scene, the relativity between the video and the network service in the virtual network scene is increased. The interaction between the video and the network service is realized and the user's experience is improved.

### BRIEF DESCRIPTION OF THE DRAWINGS

**FIG. 1** is a flowchart illustrating a method for implementing interaction between a video and a virtual network scene according to an example of the present disclosure.

**FIG. 2** is a schematic diagram illustrating an application scene of the method for implementing the interaction between the video and the virtual network scene according to a first example of the present disclosure.

**FIG. 3** is a flowchart illustrating a method for implementing interaction between the video and the virtual network scene according to the first example of the present disclosure.

**FIG. 4** is schematic diagram illustrating user interactions in the method for implementing the interaction between the video and the virtual network scene according to the first example of the present disclosure.

**FIG. 5** is a schematic diagram illustrating an apparatus for implementing interaction between the video and the virtual network scene according to a second example of the present disclosure.

**FIG. 6** is a schematic diagram illustrating a system for implementing interaction between the video and the virtual network scene according to a third example of the present disclosure.

### DETAILED DESCRIPTION

The present disclosure will be described in further detail hereinafter with reference to accompanying drawings and examples to make the technical solution and merits therein clearer.

In order to increase the relativity between a video and a network service in a virtual network scene, implement the interaction between the video and the network service and improve user's experience, an example of the present disclosure provides a method for implementing the interaction between the video and the virtual network scene. The method includes: obtaining video data of a user, displaying, on a client, a video corresponding to the video data in the virtual network scene by embedding the video in the virtual network scene; or, displaying the video corresponding to the video data in the virtual network scene on the client according to the video data. The so-called displaying the video corresponding to the video data on the virtual network scene on the client refers that the video of the user floats on the virtual network scene when being displayed. Thus, the objective of implementing the interaction between the video and the virtual network scene is achieved. The virtual network scene includes but is not limited to network game, network meeting, etc.

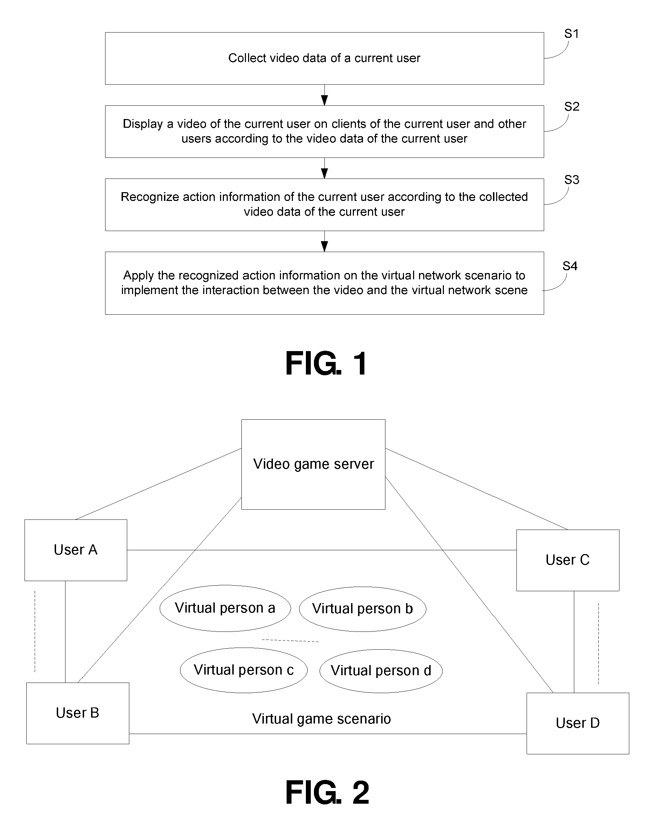

As shown in **FIG. 1****,** when there are multiple users using the virtual network scene, the method includes the following steps.

**S1,** video data of a current user is collected.

**S2,** a video of the current user is displayed on clients of the current user and other users according to the collected video data of the current user.

**S3,** action information of the current user is obtained according to the video data of the current user.

**S4,** the action information of the current user is applied on the virtual network scene to implement the interaction between the video of the current user and the virtual network scene.

The applying the action information of the current user on the virtual network scene to implement the interaction between the video and the virtual scene in step **S4** includes:
**S4A,** according to the action information of the current user and a pre-configured mapping relationship between the current user and a virtual object in the virtual network scene, map an action of the current user to the virtual object of the current user in the virtual network scene; and/or,
**S4B,** control the virtual network scene according to the action information of the current user.

The process of obtaining the action information of the current user according to the collected video data of the current user in step **S3** includes:
according to the collected video data of the current user, capture facial video data of the current user and obtain facial action information of the current user through a face detecting technique; and/or
according to the collected video data of the current user, capture action video data of the current user and obtain the body action information of the current user through motion analyzing and object tracing techniques.

In the method for implementing the interaction between the video and the virtual network scene provided by the example of the present disclosure, through associating the video and the network service in the virtual network scene, relativity between the video and the network service in the virtual network scene is increased, the interaction between the video and the network service is realized and the experience of the user is improved.

In order to make the technical solution of the method for implementing the interaction between the video and the virtual network scene provided by example of the present disclosure clearer, examples are described in further detail. For facilitating the description, a frequently-used virtual network game scene is taken as an example virtual network scene in the following examples.

Example 1

In order to increase the relativity between the video and the network service in the virtual network game scene, implement the interaction between the video and the network service and improve the user's experience, an example of the present disclosure provides a method for implementing the interaction between the video and the virtual network scene.

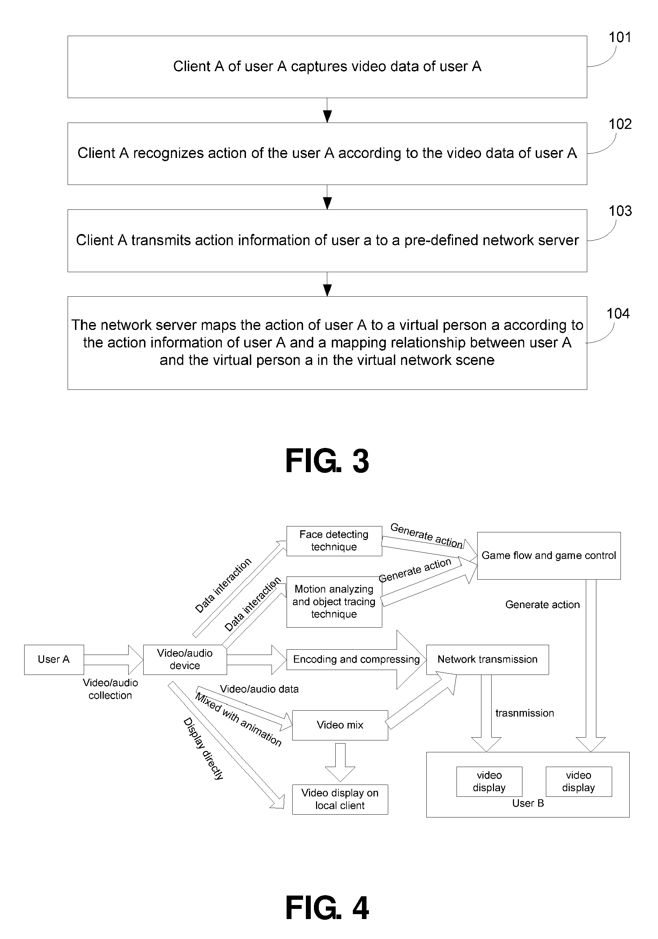

As described above, for facilitating the description, this example takes the virtual network game scene as an example. **FIG. 2** is a schematic diagram illustrating an application architecture provided by the example of the present disclosure. As show in **FIG. 2****,** suppose users in the virtual network game scene are user A, user B and user C, and the virtual objects corresponding to uses A, B and C are virtual persons a, b and c. As shown in **FIG. 3****,** the method provided by the example of the present disclosure includes the following steps.

Step **101,** client A of user A collects video data of the user A.

In a practical application, client A may be a computer equipped with an apparatus capable of capturing video data (e.g. camera), or a portal terminal equipped with the apparatus capable of capturing video data. The example of the present disclosure does not restrict the type of client A.

Step **102,** client A recognizes the action of user A according to the collected video data of user A.

The video data is corresponding to the action displayed on the apparatus capable of capturing video data. The action includes but is not limited to: facial action of the user and body action of the user.

If user A presents his/her face on client A, client A will capture facial video data of user A from the collected video data of user A through the face detecting technique. Based on the facial video data of user A, it is possible to obtain a face action of user A.

If user A presents his/her body action on client A, client A will capture body video data of user A from the collected video data of user A through the motion analyzing and object tracing techniques. Based on the body video data of user A, it is possible to obtain a body action of user A.

Step **103,** client A transmits the recognized action information of user A to a pre-configured network server.

The network server may be a video game server. Client A may transmit the recognized action information of user A to the pre-configured network server through carrying values representing detailed actions. For example, with respect to facial actions, it is possible to configure that XX1 represents blink and XX2 represents frown, etc.

Step **104,** the network server maps the action of user A to the virtual person a according to the recognized action information of user A and a mapping relationship between user A and the virtual person A in the virtual network game scene.

As described above, there is a mapping relationship between the real user and the virtual person in the virtual network game scene. In order to increase the processing efficiency of network service, as shown in FIG. 2, the example supposes that there is a network server (i.e. the video game server) to provide a virtual network game service to a plurality of users, wherein the network server saves the above mapping relationship. Accordingly, after receiving the action of user A (may be an action identifier) transmitted by client A, the network server applies the action to the virtual person a corresponding to user A. For example, suppose that the network server recognized that the action of user A is blink (the identifier of this action is XX1). Accordingly, the virtual person a in the virtual network game scene will also blink. In a practical application, it may be implemented by motion analyzing and object tracing techniques.

Through the above steps **102** to **104,** the interaction between the video of the user and the virtual network game scene is realized. In addition, it is also possible to control the virtual network game scene according to the action information. In this example, client A recognizes the action of user A according to the video data of user A and transmits the action of user A to the network server. In a practical application, in order to increase data processing efficiency, client A may also transmit the obtained video data of user A to the network server. The network server obtains the action information of user A according to the video data received. This example does not restrict that which of the above two methods is adopted. When transmitting the video data, it is also possible to encode and compress the video data in order to increase network transmission efficiency. And the present disclosure does not have any restriction to such processing.

Similarly, through the above steps **101-104,** users B and C may realize the interaction between the video and the network game scene. Thus, the user's experience is improved. Each user may see real looks of other users participating in the network game on his/her local client. Further, each client may provide a function of self-exhibition to the user, i.e. the user may also see the real look of himself/herself on the local client.

In addition, in order to improves the user's experience, the method provided by the example of the present disclosure may further include: client A receives a trigger signal transmitted by user A, captures a screen of the video of use B and a screen of the video of user C currently seen by user A to obtain a current screenshot X of user B and a current screenshot Y of user C; wherein the current screenshot X and the current screenshot Y respectively contains facial information of user B and facial information of user C. According to the facial information contained in the current screenshot X and the facial information contained in the current screenshot Y, client A calculates a matching degree between the facial information of user B and the facial information of user C to obtain a matching degree between the current screenshot X and the current screenshot Y Accordingly, it is also possible to return a calculated result to each user to further improve the user's experience.

In addition, in the method provided by the example of the present disclosure, in order to increase the relativity between the video and the network service in the virtual network game scene, if the user is sampled at a pre-defined sampling time when using the network service in the virtual network game scene, it is possible to determine whether a video meeting a pre-defined requirement is captured (in particular, it is possible to determine whether the facial video of a particular user is captured). If yes, a positive response is returned to the user, e.g. reward the user in the network game; otherwise, a negative response is returned to the user, e.g. punish the user in the network game such as forbid the user to perform a certain action in the network game.

In addition, if the user is sampled at the pre-defined sampling time when using the network service in the virtual network game scene, it is possible to determine whether the video meeting the pre-defined requirement is captured (in particular, it is possible to determine whether the facial video of a particular user is captured). If yes, an exhibition value is set for the user and an accumulation plan may be further created. The larger the exhibition value accumulated, the more likely that the user desires to exhibit himself/herself; or, the time that the user appears in the video may be accumulated (in particular, it is possible to accumulate the time that the face of the user appears in the video), the longer the time, the more likely that the user desires to exhibit himself/herself.

In addition, it is also possible to configure a facial detection feature point in advance. According to the captured facial video data of the current user and the facial detection feature point, it is determined whether a detection value corresponding to the facial feature point of the current user can be obtained. If yes, a positive response is returned to the user, e.g. reward the user in the network game; otherwise, a negative response is returned to the user, e.g. punish the user in the network game such as forbid the user to perform a certain action in the network game. For example, suppose the above facial detection feature point configured in advance is nose. Then, it is possible to determine, according to the captured facial video data of user A, that whether there is a detection feature point of the nose. If the detection value corresponding to the detection feature point can be obtained, the user is rewarded in the network game; otherwise, the user is forbad to perform a certain action in the network game, e.g. the user is forbid to keep on playing the network game or the user is punished with certain game scores, or the user is prompted to aim his/her face at the video capturing apparatus, etc.

In addition, in order to improve the user's experience, the client may also provide items such as figure items whose locations may change along the face of the user by the object tracing technique. For example, user A selects a pair of glasses. Accordingly, after receiving a trigger signal indicating that user A has selected the glasses, client A selects the glasses selected by user A and adds the glasses in a video window. In the video window, whether user A lowers his/her head or raises his/her head, the glasses will always follow the position of the face of user A. The items are configured for the user in advance or added from other locations by the user. The example of the present disclosure does not have restriction to this.

In addition, in order to improve the user's experience, the example of the present disclosure further enables the user to select one or more favorite objective video windows after seeing the video windows of other users. And the user may display an expression picture or play an animation to the objective video windows selected to express the feeling of the user and the action that the user wants to perform. For example, user A selects an expression picture of laugh and selects to display this laugh picture in the video window of user B. Accordingly, client A displays, after receiving a selection instruction triggered by user A, the laugh picture in the video window of user B through the network server. The expression picture or the animation may be configured for the user in advance or may be defined by the user himself/herself.

In addition, each user may give a virtual gift to another user after seeing the video image of the other user. An identifier is configured for each kind of virtual gifts. For example, user A decides to give a virtual gift to user B after seeing the video image of user B (suppose there are two kinds of virtual gifts, wherein FFF denotes flower and WWW denotes drink). An animation of sending the gift may be called at the video window of user A and an animation of receiving the gift may be called at the video window of user B (or it is also possible to call the animation only at one end). Accordingly, the interaction of sending gift and receiving gift may be realized through value transmission.

In addition, in the above example, the interaction between the video and the network service in the virtual network game scene is taken as an example. The example may also be applied to interaction between an audio and the network service in the virtual network game scene, i.e., a client apparatus samples voice of the user, recognize audio data to obtain information that the user wants to express and applies the information that the user wants to express to the virtual network game scene, or applies to the virtual person in the virtual network game scene. For example, client A obtains a "blink" command of user A, obtains the blink action through voice recognizing and applies the blink action to the virtual person a of user A; for another example, client A obtains a "forward" command of user A, obtains the forward action through voice recognizing and applies the blink action to the virtual person a of user A. then the virtual person a performs the forward action in the virtual network game scene.

In view of the above, the example of the present disclosure provides a method for implementing interaction between a video and a virtual network scene, wherein the video includes but is not limited to image, voice, etc. **FIG. 4** is a schematic diagram illustrating a user interaction process according to an example of the present disclosure. The face detection technique includes but is not limited to low-level feature detection method based on gray scale image of OpenCv, Haar feature detection methods, etc. In the method provided by the example of the present disclosure, a video window is embedded in the virtual network game scene. Thus, the interaction between the video and the virtual network scene is realized. In addition, in the method provided by the example of the present disclosure, face detection technique, motion analyzing technique and object tracing technique are adopted to implement the interaction between the video and the virtual network scene. A video mix technique may also be adopted to improve the interaction by mixing the video with an animation.

In the above example, the virtual network game scene is taken as an example. The method provided by the example of the present disclosure may also be applied to other scenes such as a virtual network meeting scene. The terms, descriptions and figures used herein are set forth by way of illustration only and are not meant as limitations.

Example 2

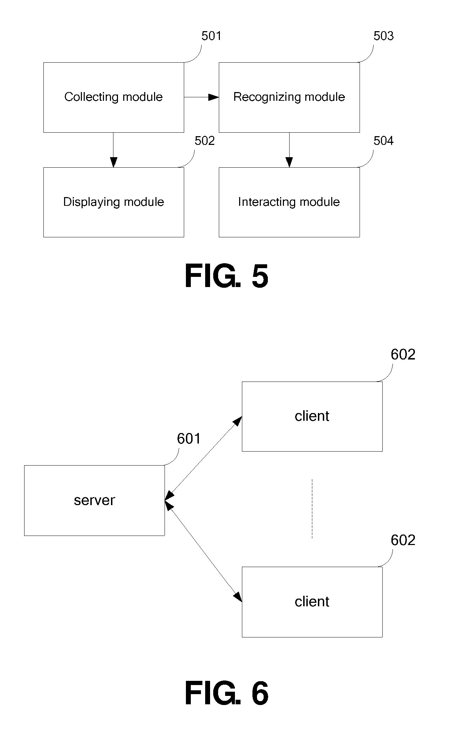

Corresponding to the above method example, in order to increase relativity between a video and a network service in the virtual network game scene, implement the interaction between the video and the network service and improve user's experience, an example of the present disclosure provide an apparatus for implementing the interaction between the video and the virtual network scene. The apparatus is to obtain video data of the user, display, on a client, a video corresponding to the video data in the virtual network scene by embedding the video in the virtual network scene; or, display the video corresponding to the video data in the virtual network scene on the client according to the video data. The so-called displaying the video in the virtual network scene means that the video of the user is floating on the virtual network scene when being displayed. As shown in **FIG. 5****,** the apparatus includes:
a collecting module **501,** to collect video data of the current user;
a displaying module **502,** to display a video of the current user on clients of the current user and other users according to the video data of the current user;
a recognizing module **503,** to recognize action information of the current user according to the video data of the current user; and
an interacting module **504,** to apply the action information of the current user recognized by the recognizing module **503** to the virtual network scene to implement the interaction between the video of the current user and the virtual network scene.

The interacting module **504** includes:
a mapping unit, to map a recognized action of the current user to a virtual person of the current user in the virtual network scene according to the action information of the current user recognized by the recognizing module 503 and a mapping relationship between the current user and the virtual person in the virtual network scene; and
a controlling unit, to control the virtual network scene according to the action information of the current user recognized by the recognizing module 503.

The recognizing module **503** includes:
a first recognizing unit, to capture facial video data of the current user according to the video data of the current user collected by the collecting module **501** and recognize facial action information of the current user through a face detecting technique; and/or
a second recognizing unit, to capture action video data of the current user according to the video data of the current user collected by the collecting module **501** and recognize body action information of the current user through motion and object tracing techniques.

The apparatus further includes:
a first determining module, to determine, at a pre-defined collecting time, whether the video data of the current user meeting a pre-defined requirement is captured;
a first rewarding and punishing module, to return a positive response to the current user when the determining module determines that the video data of the current user meeting the pre-defined requirement is captured, and to return a negative response to the current user when the determining module determines that the video data of the current user meeting the pre-defined requirement is not captured.

When the recognizing module **503** includes the first recognizing unit, the apparatus further includes:
a first rewarding module, to accumulate the time that the facial video data of the current user can be captured according to the facial video data of the current user captured by the capturing module, and to reward the current user according to the time accumulated by the accumulating module; and/or
a second determining module, to obtain a detecting value corresponding to a face detection feature point of the current user according to the facial video data of the current user and the face detection feature point defined in advance, and to return a positive or negative response to the current user according to the detected value.

Further, in order to improve the user's experience, the apparatus may further include:
a receiving module, to a virtual item adding signal transmitted by the current user;
a selecting module, to select an item that the current user wants to add after the item adding signal is received by the receiving module.

Accordingly, the displaying module **502** may display the collected video data of the current user and the item that the current user wants to add on the clients of the current user and other users.

When the item is displayed by the displaying module **502,** the position of the item changes along with the position of the face of the current user.

In addition, in order to improve the user's experience, the apparatus may further include:
a screen capturing module, to receive a capture-screen signal triggered by the current user, capture a screen of videos of at least two uses displayed on the client of the current user to obtain at least to screenshots; wherein the screenshots include facial information of users;
a processing module, to calculate a matching degree between facial information of the at least two users according to the facial information of the users included in the at least two screenshots obtained by the screen capturing module, and return a calculated result to the each user.

In practical applications, the modules provided by the examples for implementing interaction between the video and the virtual network scene may be located in the same apparatus (for example, the collecting module, the displaying module, the recognizing module and the interacting module may be located in the client) or may be located in different apparatuses (for example, the collecting module and the displaying module are located in the client, whereas the recognizing module and the interacting module are located in the server). The modules provided by the above example may be integrated into one module according to a requirement. And each module in the above example may also be divided into several sub-modules.

In view of the above, examples of the present disclosure provide an apparatus for implementing the interaction between the video and the virtual network scene. The apparatus provided by the example of the present disclosure is able to implement the interaction between the video and the virtual network scene. The method provided by the example of the present disclosure is able to implement the interaction between the video and the virtual network scene utilizing the facial recognizing technique, motion analyzing and object tracing techniques and action capturing technique. And interactions between users may be improved by mixed animation utilizing video mixing techniques.

Example 3

Corresponding to the above example, in order to increase the relativity between the video and the network service in the virtual network game scene, implement interaction between the video and the network service and improve the user's experience, an example of the present disclosure provides a system for implementing interaction between the video and the virtual network scene. As shown in **FIG. 6****,** the system includes: a server **601** to implement interaction between the video and the virtual network scene, and a plurality of clients **602** to implement the interaction between the video and the virtual network scene.

Each of the clients **602** is to collect video data of a current user, display a video of the current user on clients **602** of the current user and other users according to the video data of the current user, obtain action information of the current user according to the collected video data of the current user, apply the action information of the current user to the virtual network scene to implement the interaction between the video of the current user and the virtual network scene.

The server **601** is to forward the video data of the clients **602,** and control the virtual network scene after forwarding virtual scene control information between the clients **602.**

Optionally, besides being forwarded by the server **601,** the video data and the virtual scene control information may also be transmitted between the clients **602** through a P2P manner. And the video data and the virtual network data (e.g. virtual network game data) may be transmitted separately.

In particular, considering a practical application, in order to improve transmission efficiency of the network and save network transmission bandwidth, the system may include a client, a video server and a game server.

The client is to collect the video data of the current user, display the video of the current user and display videos of other users, obtain action information of the current user according to the collected video data of the current user, and display the virtual network scene.

The video server is to collect the video data collected by the client, forward the video data, collect the action information obtained by the client and apply the action information on the virtual network scene through the virtual scene server to implement the interaction between the video and the virtual network scene.

The virtual scene server is to execute a flowchart of the virtual network scene, apply the action information obtained by the video server on the virtual network scene to implement the interaction between the video and the virtual network scene. If the virtual scene server is a network game, the above virtual scene server is a game server.

With respect to a current popular P2P network structure, the system provided by the example of the present disclosure may include:
a client, to collect the video data of the current user, display the video of the current user and display videos of other users, recognize action information of the current user according to the collected video data of the current user, and display the virtual network scene;
a video server, to collect the video data collected by the client, forward the video data, collect the action information recognized by the client and apply the action information on the virtual network scene through a virtual scene server to implement the interaction between the video and the virtual network scene;
the virtual scene server, to execute a flowchart of the virtual network scene, apply the action information obtained by the video server on the virtual network scene to implement the interaction between the video and the virtual network scene, wherein if the virtual scene server is a network game, the above virtual scene server is a game server; and
a P2P server, to backup data for the video server and the virtual scene server to implement fault recovery and backup functions.

The example of the present disclosure has no restriction to the architecture of the system. Any solution which implements interaction between the video and the virtual network scene by combining the video and the virtual network scene is within the protection scope of the present disclosure.

In view of the above, examples of the present disclosure provide a system for implementing interaction between the video and the virtual network scene. The system provided by the example of the present disclosure is able to implement the interaction between the video and the virtual network scene through embedding a video window in the virtual network game scene. The method provided by the example of the present disclosure is able to implement the interaction between the video and the virtual network scene utilizing the face detection technique, the motion analyzing and object tracing techniques and the action capturing technique. And interactions between users may be improved by a video mix technique.

The technical solution provided by the example of the present disclosure is able to meet requirements of users to the network service in the virtual network scene, enable the user to see real identities and real looks of other persons participating in the network service while enjoying in the network service in the virtual network scene, and enable other users to see the user himself/herself during the network service. Relativity between the video and the network service in the virtual network scene is increased. And interaction between the video and the network server is realized.

The term "receiving" in the examples of the present disclosure may be comprehended as acquiring information from other modules initiatively or receiving information from other modules.

The drawings are example schematic diagrams. Not all the modules and flows in the drawings are necessary for implementing the present disclosure.

The modules in the apparatus provided by the example of the present disclosure may be arranged in the apparatus provided by the example of the present disclosure according to the description of the example, or may be changed accordingly to be located in one or more apparatuses of the example. The modules may be integrated into one module or may be divided into several sub-modules.

The above sequence numbers of the examples are merely used for facilitating the description but not used to denoting preference of the examples.

Example 4

Some steps in the example of the present disclosure may be implemented by software programs stored in a computer-readable storage medium, e.g. CD or hard disk.

Corresponding to the above examples, in order to increase the relativity between the video and the network service in the virtual network scene, implement interaction between the video and the network service and improve the user's experience, an example of the present disclosure provides a computer-readable storage medium which stores computer programs enable one or more processors to execute the following steps:
obtaining video data of a user, displaying a video corresponding to the video data on a client by embedding the video in the virtual network scene; or, displaying the video corresponding to the video data in the virtual network scene of the client; or, controlling or affecting the virtual network scene according to the video data.

The programs further enable the one or more processors to execute the following steps:
collecting the video data of the current user, displaying the video data of the current user on clients of the current user and other users; recognize action information of the current user according to the video data of the current user, applying the action information of the current user on the virtual network scene to implement the interaction between the video and the virtual network scene.

The programs further enable the one or more processors to execute the following steps:
capturing facial video data of the current user according to the video data of the current user through a face detecting technique, recognizing face action information of the user; and/or, capturing action video data of the current user according to the video data of the current user through motion analyzing and object tracing techniques, and recognizing body action information of the current user.

The programs further enable the one or more processors to execute the following steps:
mapping the action of the current user to a virtual person of the current user in the virtual network scene according to the action information of the current user and a pre-defined mapping relationship between the current user and the virtual person in the virtual network scene; and/or, controlling the virtual network scene according to the action information of the current user.

What has been described and illustrated herein is a preferred example of the disclosure along with some of its variations. The terms, descriptions and figures used herein are set forth by way of illustration only and are not meant as limitations. Many variations are possible within the spirit and scope of the disclosure, which is intended to be defined by the following claims -- and their equivalents -- in which all terms are meant in their broadest reasonable sense unless otherwise indicated.

## Claims

1. A method for implementing interaction between a video and a virtual network scene, comprising:
obtaining video data of a user;
displaying, on a client, a video corresponding to the video data by embedding the video in the virtual network scene; or
displaying the video corresponding to the video data in the virtual network scene according to the video data.

2. The method of claim 1, wherein there are at least two users using the virtual network scene, and the method further comprises:
collecting video data of the user;
displaying a video of the user on clients of the user and other users according to the video data of the user;
recognizing action information of the user according to the collected video data of the user; and
applying the action information of the user on the virtual network scene to implement the interaction between the video and the virtual network scene.

3. The method of claim 2, wherein the recognizing the action information of the user according to the collected video data of the user comprises:
capturing facial video data of the user according to the collected video data of the user and recognizing facial action information of the user utilizing a face detecting technique; and/or
capturing action video data of the user according to collected video data of the user and recognizing body action information of the user utilizing motion analyzing and object tracing techniques.

4. The method of claim 2, wherein the applying the action information of the user on the virtual network scene to implement the interaction between the video and the virtual network scene comprises:
mapping an action of the user to a virtual person in the virtual network scene according to the action information of the user and a pre-defined mapping relationship between the user and the virtual person in the virtual network scene; and/or
controlling the virtual network scene according to the action information of the user.

5. The method of claim 2, further comprising:
determining, at a pre-defined collecting time, whether the video data of the user meeting a pre-defined requirement is captured, if the video data is captured, returning a positive response to the user; otherwise, returning a negative response to the user.

6. The method of claim 5, wherein the determining whether the video data of the user meeting the pre-defined requirement is captured comprises:
determining whether facial video data of the user is captured, if the facial video data of the user is captured, determining that the video data of the user meeting the pre-defined requirement is captured; otherwise, determining that the video data of the user meeting the pre-defined requirement is not captured.

7. The method of claim 2, further comprising:
when recognizing the facial action information of the user according to the facial video data of the user utilizing the face detecting technique,
accumulating the time that the facial video data of the user can be captured according to the facial video data of the user, rewarding the user according to the time accumulated; and/or
obtaining detection values of facial detecting feature points of the user according to the facial video data of the user and pre-defined facial detecting feature points; and returning a positive or negative response to the user according to the detection values.

8. The method of claim 5, 6 or 7, wherein the returning the positive response to the user comprises but is not limited to: rewarding the user;
the returning the negative response to the user comprises but is not limited to: forbidding the user to use the virtual network scene.

9. The method of claim 2, 3 or 4, further comprising:
receiving a virtual item adding signal transmitted by the user, selecting a virtual item that the user wants to add;
after displaying the collected video of the user on the clients of the user and other users, displaying the video data of the user and the virtual item that the user wants to add on the clients of the user and other users.

10. The method of claim 9, wherein when the virtual item that the user wants to add is displayed, the virtual item moves with the position of the face of the user synchronously.

11. The method of claim 2 or 3, further comprising:
receiving a capture-screen signal triggered by the user;
capture a screen of videos of at least two users displayed on the client of the user to obtain at least two screenshots, wherein the screenshots comprise facial information of the at least two users;
calculating a matching degree between the facial information of the at least two users according to the facial information comprised in the at least two screenshots, and returning a calculated result to the at least two users.

12. An apparatus for implementing interaction between a video and a virtual network scene, comprising:
means for obtaining video data of a user;
means for displaying a video corresponding to the video data of the user in a virtual network scene on a client of the user by embedding the video in the virtual network scene; or means for displaying a video corresponding to the video data in the virtual network scene on a client.

13. The apparatus of claim 12, comprising:
a collecting module, to collect video data of a user;
a displaying module, to display a video corresponding to the video data of the user collected by the collecting module on clients of the user and other users;
a recognizing module, to recognize action information of the user according to the video data of the user collected by the collecting module, and
an interacting module, to apply the action information of the user recognized by the recognizing module to the virtual network scene to implement the interaction between the video and the virtual network scene.

14. The apparatus of claim 13, wherein the recognizing module comprises:
a first recognizing unit, to capture facial video data of the user according to the video data of the user collected by the collecting module and recognize facial action information of the user utilizing a face detecting technique; and/or
a second recognizing unit, to capture action video data of the user according to the video data of the user collected by the collecting module and recognize body action information of the user utilizing motion analyzing and object tracing techniques,.

15. The apparatus of claim 13, wherein the interacting module comprises:
a mapping unit, to map an action of the user to a virtual person of the user in the virtual network scene according to the action information of the user recognized by the recognizing module and a pre-defined mapping relationship between the user and the virtual person in the virtual network scene;
a controlling unit, to control the virtual network scene according to the action information of the user recognized by the recognizing module.

16. The apparatus of claim 15, further comprising:
a first determining module, to determine whether video data of the user meeting a pre-defined requirement is captured at a pre-defined collecting time; and
a first rewarding and punishing module, to return a positive response to the user when the determining module determines that the video data of the user meeting the pre-defined requirement is captured and return a negative response to the user when the determining module determines that the video data of the user meeting the pre-defined requirement is not captured.

17. The apparatus of claim 15, wherein when the recognizing module comprises the first recognizing unit, the apparatus further comprises:
a first rewarding module, to accumulate the time that the facial video data of the user can be captured according to the facial video data of the user captured by the capturing module, and reward the user according to the time accumulated; and/or
a second determining module, to obtain a detection value of a facial detecting feature point of the user according to the facial video data of the user and the pre-defined facial detecting feature point, and return the positive or negative response to the user according to the detection value.

18. The apparatus of claim 13 or 14, further comprising:
a receiving module, to receive a virtual item adding signal transmitted by the user;
a selecting module, to select an item that user wants to add after the receiving module receives the item adding signal;
the displaying module is further to display the video data of the user and the item that the user wants to add on the clients of the user and other users.

19. The apparatus of claim 18, wherein when the displaying module displays the item, the item moves with the position of the face of the user synchronously.

20. The apparatus of claim 13 or 14, further comprising:
a screen capturing module, to receive a capture-screen signal triggered by the user, capture a screen of videos of at least two users displayed on the client of the user to obtain at least two screenshots, wherein the screenshots comprises facial information of the at least two users;
a processing module, to calculate a matching degree between the facial information of the at least two users according to the facial information comprised in the at least two screenshots obtained by the screen capturing module, and return a calculated result to the user.

21. A system for implementing interaction between a video and a virtual network scene, comprising: a server to implement the interaction between the video and the virtual network scene, at least two clients to implement interaction between the video and the virtual network scene, wherein
each of the at least two clients is to collect video data of a user, display a video of the user on the client according to the video data of the user, recognize action information of the user according to the video data of the user, apply the action information of the user on the virtual network scene to implement the interaction between the video and the virtual network scene;
the server is to forward the video data between the clients, and control the virtual network scene after forwarding virtual network scene control information between the clients.

22. A computer-readable storage medium, comprising computer instructions executable with one or more processors, wherein the computer instructions enable the one or more processors to:
obtain video data of a user,
display, on a client, a video corresponding to the video data in the virtual network scene by embedding the video in the virtual network scene; or,
display the video corresponding to the video data in the virtual network scene of the client.

23. The computer readable storage medium of claim 22, further comprising computer instructions enable the one or more processors to:
collect the video data of the user,
display the video data of the user on clients of the user and other users;
recognize action information of the user according to the video data of the user,
apply the action information of the user on the virtual network scene to implement interaction between the video and the virtual network scene.

24. The computer readable storage medium of claim 23, further comprising computer instructions enable the one or more processors to:
capture facial video data of the user according to the video data of the user and recognize face action information of the user through a face detecting technique; and/or,
capture action video data of the user according to the video data of the user and recognize body action information of the user through motion analyzing and object tracing techniques,.

25. The computer readable storage medium of claim 23, further comprising computer instructions enable the one or more processors to:
map the action of the user to a virtual person of the user in the virtual network scene according to the action information of the user and a pre-defined mapping relationship between the user and the virtual person in the virtual network scene; and/or,
control the virtual network scene according to the action information of the user.
